# EUROPÄISCHE PATENTANMELDUNG

(11) **EP 4 813 523 A1**
(43) Veröffentlichungstag der Anmeldung: **30.09.2026**
(21) Anmeldenummer: 26164544.4
(22) Anmeldetag: 13.03.2026
(51) Int. Cl.: B05B 13/00

(54) **VERFAHREN ZUM BESCHICHTEN GROSSFLÄCHIGER INDUSTRIE- UND BAUWERKSKOMPONENTEN SOWIE LACKIERAUTOMAT**

(30) Priorität: 14.03.2025 DE 102025110014
(71) Anmelder: Rodopi Holding GmbH, 40472 Düsseldorf (DE); Venjakob Maschinenbau GmbH & Co. KG, 33378 Rheda-Wiedenbrück (DE)
(72) Erfinder: Theismann, Tobias, 33442 Herzebrock (DE); Kara Osman, Ercan, 40472 Düsseldorf (DE); Dogan, Burak, 41564 Kaarst (DE)
(74) Vertreter: Patentanwälte Bauer Vorberg Kayser

(57) **Zusammenfassung**

Die Erfindung betrifft ein Verfahren zum Beschichten großflächiger Industrie- und Bauwerkskomponenten, insbesondere für den Außeneinsatz, vorzugsweise in korrosionsintensiven Umgebungen, besonders bevorzugt für den Offshore-Einsatz, wobei ein Bauteil (9) mit einer zusammenhängende Großfläche durch eine Beschichtungsdüse (110; 210) mit einem Beschichtungsmaterial besprüht wird. Das Verfahren setzt auf den Einsatz eines Lackierautomaten (100; 200). Die Erfindung betrifft auch den Lackierautomaten (100; 200) selbst, welcher eine Beschichtungsdüse (110; 210), einen Linearantrieb (111) und eine Führung (131; 231) aufweist, wobei der Linearantrieb (111) eingerichtet ist, die Beschichtungsdüse (110; 210) entlang der Führung (131; 231) des Lackierautomaten (100; 200) zu verfahren, sowie ferner einen Automatenantrieb (120; 220) zum Verfahren des Lackierautomaten (100; 200).

## Beschreibung

Die vorliegende Erfindung betrifft ein Verfahren zum Beschichten großflächiger Industrie- und Bauwerkskomponenten, insbesondere für den Außeneinsatz in korrosionsintensiven Umgebungen wie dem Offshore-Bereich, und wie es gemäß Oberbegriff von Anspruch 1 definiert ist. Die Erfindung betrifft weiterhin einen Lackierautomaten zum automatischen Beschichten großflächiger Industrie- und Bauwerkskomponenten, insbesondere für den Außeneinsatz, vorzugsweise in korrosionsintensiven Umgebungen, besonders bevorzugt für den Offshore-Einsatz.

Großflächige Industrie- und Bauwerkskomponenten, insbesondere solche, die im Offshore-Bereich eingesetzt werden, sind häufig extremen Umweltbedingungen ausgesetzt, die eine regelmäßige und hochwertige Beschichtung erfordern, um Korrosion und andere Schäden zu verhindern. Neben der üblichen mechanischen Bearbeitung und Montage dieser Komponenten ist die Beschichtung ein kritischer Schritt, der die Lebensdauer und Zuverlässigkeit der Bauteile erheblich beeinflusst.

Ein Beispiel für ein entsprechendes Bauteil mit einer zusammenhängenden Großfläche, die es zu beschichten gilt, ist eine Grundstruktur einer Offshore-Windkraftanlage, und zwar konkret ein Monopile (welcher auch als Grundstruktur für andere Offshore-Bauwerke eingesetzt werden kann). Auch andere Fundamentstrukturen von Windkraftanlagen, oder auch großflächige Komponenten der Windkraftanlage selbst, wie etwa der Turm oder Rotorblätter, könnten entsprechende großflächige zu beschichtende Bauteile sein. Der Monopile wiederum ist regelmäßig aus Stahl gebildet und wiegt mindestens 1.000 t. Zwecks Korrosionsschutz gilt es diesen Monopile mit Beschichtungsmaterial zu beschichten, bzw. konkret zu lackieren.

Weitere Beispiele für andere Industriekomponenten, bei denen Bauteile mit einer zusammenhängende Großfläche zu beschichten sind, können Pipelines oder große Rohrleitungen sein, sowie weiterhin auch große Tanks und dergleichen. Weiteren Bauwerkskomponenten (zu denen eventuell je nach Fall wiederum auch große Tanks gezählt werden können) können Öl- oder Gas-Plattformen (insbesondere im Offshore-Einsatz), Schiffskomponenten, wie etwa Schiffsrümpfe oder Decks, Brückenbauteile, wie etwa großflächige Stahlstrukturen oder Brückenpfeiler, oder auch Hafeninfrastruktur, wie etwa Hafen- oder auch wassernahe Gebäude, Hallen oder Docks, sein.

Aus dem Stand der Technik ist es bekannt, solche großflächigen Bauteile mit Gerüsten zu umbauen und sodann durch Fachpersonal unter händischem Einsatz beschichten zu lassen. Dabei führt das Fachpersonal regelmäßig händisch und sich auf dem Gerüst fortbewegend eine Spritzpistole mit Beschichtungsdüse, um das Bauteil mit Beschichtungsmaterial zu besprühen. Diese Methode ist jedoch zeitaufwendig, arbeitsintensiv, birgt diverse Sicherheitsrisiken für das Fachpersonal, sowie kann auch unter einer nicht einheitlichen Qualität leiden, da unterschiedliches Fachpersonal unterschiedliche Ergebnisse liefert bzw. auch dasselbe Fachpersonal im Laufe einer Schicht unterschiedliche Arbeitsergebnisse.

Gerade beim Lackieren von Monopiles ist jedoch eine einheitliche Qualität von hoher Wichtigkeit. So ist aufgrund der immensen Dimensionen des Bauteils und aufgrund seines Einsatzes im Offshore-Bereich und damit in einer korrosionsintensiven Umgebung einerseits essenziell, dass der Monopile möglichst lange den rauen Bedingungen standhalten kann, sowie andererseits wichtig, dass die aufgebrachte Beschichtung als Korrosionsschutz höchstens Standards entspricht. Hierzu ist etwa eine gleichmäßige Schichtdicke des aufgetragenen Beschichtungsmaterials von hoher Bedeutung, sowie ferner, dass sich möglichst wenig bzw. möglichst kein sogenannter overspray bildet, also kein Beschichtungs- bzw. Lackstaub auf dem noch feuchten Beschichtungsauftrag niederlässt, was die finale Oberflächengüte des Monopiles reduzieren würde. Um diesen Anforderungen gerecht zu werden, wird gemäß Stand der Technik regelmäßig ein großer Aufwand betrieben. So kommt viel erfahrenes Fachpersonal zum Einsatz, das besonders ausgebildet ist und händisch mit Spritzpistolen einen möglichst gleichmäßigen Lackauftrag vornimmt. Auch der Aufwand zur Bereitstellung der entsprechenden Rahmenbedingungen auf der Baustelle ist hoch, um ein solches Gewerk durchzuführen. So kommen Gerüste und häufig eigens angepasste Hallen kommen zum Einsatz, die besondere Rahmenbedingungen zur Verfügung zu stellen, um den overspray möglichst zu vermeiden.

Zum Beschichten großflächiger Bauteile ist es daher wünschenswert, einen qualitativ gleichmäßigeren, möglichst weniger Personal- und zeitintensiven Prozess mit höherem Automatisierungsgrad bereitzustellen, der eine präzise und gleichmäßige Beschichtung ermöglicht.

Ausgehend von diesem Stand der Technik besteht die Aufgabe der Erfindung daher darin, das aus dem Stand der Technik bekannte Verfahren zum Beschichten großflächiger Bauteile so weiterzuentwickeln und zu verbessern, sowie ferner einen entsprechenden Lackierautomaten dahingehend bereitzustellen, dass die Beschichtung möglichst einfach und zuverlässig ohne großen zusätzlichen Materialaufwand zum Durchführen der Beschichtungsarbeiten durchgeführt werden kann.

Diese Aufgabe wird für ein Verfahren zum Beschichten großflächiger Industrie- und Bauwerkskomponenten mit den Merkmalen des Oberbegriffs von Anspruch 1 durch die Merkmale des kennzeichnenden Teils von Anspruch 1 gelöst. Bezogen auf einen Lackierautomaten wird die Aufgabe durch die Merkmale von Anspruch 7 gelöst. Vorteilhafte Ausgestaltungen des Verfahrens und des Lackierautomaten sind Gegenstand der abhängigen Ansprüche sowie der nachfolgenden Beschreibung.

Zentral ist vorliegend die Erkenntnis, dass die Beschichtung nicht mehr unter Aufbau eines Gerüsts um das Bauteil herum, sowie zudem nicht mehr durch besonders geschultes händisches Führen von Beschichtungsdüsen durchgeführt werden muss, was eine größere Abhängigkeit von der individuellen Arbeitsqualität des Fachpersonals sowie einen großen begleitenden Material- und Zeitaufwand durch Vorbereitung der Baustelle zum Durchführen der Beschichtungsarbeiten mit sich bringt, sondern dass die Beschichtungsdüse vorschlagsgemäß nunmehr durch einen Linearantrieb automatisch entlang einer Führung verfahren wird. Auf diese Weise muss nicht mehr das Fachpersonal die Beschichtungsdüse führen, wodurch eine Geschwindigkeitssteigerung und Vereinheitlichung der Qualität gewonnen werden. Der bevorzugt auch ferngesteuert über den Automatenantrieb verfahrbare Lackierautomat kann das großflächige Bauteil individuell an der Baustelle, abhängig von den dortigen gegebenen Ortsgegebenheiten und hierauf angepasst, abfahren und somit das Gesamtgewerk der Beschichtung des Bauteils effizient erledigen.

Das vorschlagsgemäße Verfahren zum Beschichten großflächiger Industrie- und Bauwerkskomponenten, wie konkret in Anspruch 1 beschrieben, findet insbesondere bei Komponenten für den Außeneinsatz Anwendung. Vorzugsweise werden Komponenten für den Einsatz in korrosionsintensiven Umgebungen, bevorzugt für den Offshore-Einsatz, beschichten. Insbesondere handelt es sich bei dem Verfahren um ein Verfahren zum Beschichten bzw. um ein Verfahren zum Lackieren eines Monopiles.

Bei dem vorschlagsgemäßen Verfahren wird ein Bauteil mit einer zusammenhängende Großfläche durch eine Beschichtungsdüse mit einem Beschichtungsmaterial besprüht, bzw. wird ein Bauteil bzw. ein Monopile durch eine Beschichtungsdüse mit einem Korrosionsschutzmittel lackiert.

Das vorschlagsgemäße Verfahren ist dadurch gekennzeichnet, dass ein Lackierautomat die Beschichtungsdüse aufweist und das Besprühen durchführt, indem ein Linearantrieb des Lackierautomaten die Beschichtungsdüse entlang einer Führung des Lackierautomaten verfährt und dass der Lackierautomat einen Automatenantrieb zum Verfahren des Lackierautomaten aufweist.

Der nach einem weiteren unabhängigen Aspekt der Erfindung vorgeschlagene Lackierautomat, wie konkret in Anspruch 7 beschrieben, ist zum automatischen Beschichten großflächiger Industrie- und Bauwerkskomponenten, insbesondere für den Außeneinsatz, vorzugsweise in korrosionsintensiven Umgebungen, besonders bevorzugt für den Offshore-Einsatz, eingerichtet. Insbesondere ist er zum Beschichten bzw. Lackieren eines Monopiles, vorzugsweise entweder von außen oder von innen, eingerichtet.

Der vorschlagsgemäße Lackierautomat umfasst eine Beschichtungsdüse, einen Linearantrieb und eine Führung, wobei der Linearantrieb eingerichtet ist, die Beschichtungsdüse entlang der Führung des Lackierautomaten zu verfahren. Ferner umfasst der Lackierautomat einen Automatenantrieb zum Verfahren des Lackierautomaten.

Insbesondere ist der vorschlagsgemäße Lackierautomat eingerichtet, das vorschlagsgemäße Verfahren zum Beschichten, wie etwa vorstehend bzw. in Anspruch 1 oder auch nachfolgend beschrieben, durchzuführen. Insbesondere handelt es sich bei dem in dem vorschlagsgemäßen Verfahren zum Beschichten zum Einsatz kommenden Lackierautomaten um einen vorschlagsgemäßen Lackierautomaten, wie etwa vorstehend bzw. in Anspruch 7 oder auch nachfolgend beschrieben.

Merkmale, die nachfolgend lediglich im Zusammenhang mit dem Gegenstand des Lackierautomaten beschrieben werden, können auf technisch sinnvolle Weise auch auf das vorschlagsgemäße Verfahren zum Beschichten übertragen werden und gegebenenfalls weitere eigenständige Ausführungsformen des Verfahrens zum Beschichten ausbilden. Ebenso ist umgekehrt denkbar, dass nachfolgend lediglich im Zusammenhang mit dem Verfahren zum Beschichten beschriebene Merkmale auf technisch sinnvolle Weise auch auf den vorschlagsgemäßen Lackierautomaten übertragen werden und gegebenenfalls weitere eigenständige Ausführungsformen des Lackierautomaten ausbilden können.

Das zu beschichtende Bauteil kann insbesondere Stahl aufweisen bzw. aus Stahl bestehen. Insbesondere kann das Bauteil mindestens 500 t, vorzugsweise mindestens 750 t, bevorzugt mindestens 1.000 t, wiegen. Insbesondere kann das Bauteil bis zu 5.000 t wiegen, vorzugsweise bis zu 4.000 t. Insbesondere kann das Bauteil eine Länge von mindestens 50 m, vorzugsweise mindestens 60 m, bevorzugt mindestens 75 m, aufweisen. Insbesondere kann das Bauteil eine Erstreckung senkrecht zur Längserstreckung, insbesondere in dem zu lackierenden Bereich, von mindestens 1 m, vorzugsweise mindestens 2 m, bevorzugt mindestens 4 m, aufweisen. Insbesondere kann der gesamte zu beschichtende Abschnitt der zusammenhängenden Großfläche des Bauteils eine Ungleichmäßigkeit aufweisen, beispielsweise einen Knick oder einen Durchmesserübergang, insbesondere beispielsweise eine sich verjüngende oder konische Fläche. Insbesondere kann der gesamte zu beschichtende Abschnitt der zusammenhängenden Großfläche des Bauteils eine Fläche von mindestens 20 m², insbesondere mindestens 100 m², vorzugsweise mindestens 200 m², besonders bevorzugt mindestens 500 m². Das Bauteil ist insbesondere ein Monopile, welcher Monopile, insbesondere, einen Abschnitt größeren Durchmessers (mit einem Außendurchmesser von mindestens 6 m, vorzugsweise mindestens 8 m, sowie mit einem Innendurchmesser von mindestens 3 m, vorzugsweise mindestens 5 m, sowie mit einer Länge von mindestens 25 m, vorzugsweise mindestens 40 m), sowie einen konischer Übergangsabschnitt (mit einer Länge von mindestens 8 m, vorzugsweise mindestens 12 m), sowie einen Abschnitt kleineren Durchmessers (mit einem Außendurchmesser von mindestens 3 m, vorzugsweise mindestens 5 m, sowie mit einem Innendurchmesser von mindestens 2 m, vorzugsweise mindestens 4 m, sowie mit einer Länge von mindestens 10 m, vorzugsweise mindestens 20 m) aufweist.

Der durch die Führung bereitgestellte Verfahrweg für die Beschichtungsdüse beträgt von einem bis zum anderen Ende gesehen insbesondere mindestens 2 m, vorzugsweise mindestens 4 m, bevorzugt mindestens 5 m. Weiterhin beträgt der Verfahrweg insbesondere maximal 20 m, insbesondere maximal 15 m, bevorzugt maximal 10 m.

Insbesondere kann der Lackierautomat eine Außeneinheit zum Beschichten des Bauteils von außen sein. Alternativ kann der Lackierautomat eine Inneneinheit zum Beschichten des Bauteils von innen sein, insbesondere eine Inneneinheit zum Lackieren eines Innenraums des Monopiles. Insbesondere kann der Lackierautomat ein durch den Automatenantrieb verfahrbares Fahrgestell aufweisen, welches Fahrgestell insbesondere eine Breitenerstreckung von mindestens 1 m, vorzugsweise mindestens 1,80 m (im Falle einer Außeneinheit besonders bevorzugt von mindestens 2 m, vorzugsweise mindestens 2,75 m), sowie von höchstens 4 m, insbesondere höchstens 3 m (im Falle einer Inneneinheit besonders bevorzugt von höchstens 3 m, insbesondere höchstens 2,25 m), aufweist. Das Fahrgestell weist ferner eine Längserstreckung von mindestens 2 m, vorzugsweise mindestens 3 m (im Falle einer Außeneinheit besonders bevorzugt von mindestens 4,50 m, vorzugsweise mindestens 7 m), sowie von höchstens 15 m, insbesondere höchstens 11 m (im Falle einer Inneneinheit besonders bevorzugt von höchstens 7 m, insbesondere höchstens 4,50 m), auf. Der Lackierautomat weist insbesondere eine Höhenerstreckung von mindestens 1,80 m, vorzugsweise mindestens 2,50 m (im Falle einer Außeneinheit besonders bevorzugt von mindestens 7,50 m, vorzugsweise mindestens 9 m), sowie von höchstens 15 m, insbesondere höchstens 12 m (im Falle einer Inneneinheit besonders bevorzugt von höchstens 5 m, insbesondere höchstens 3 m), auf.

Die Parameter des Lackierautomaten sind derart, dass eine Beschichtungsleistung über das Beschichten mittels der Beschichtungsdüse von mindestens 30 m²/h, insbesondere mindestens 50 m²/h, vorzugsweise mindestens 75 m²/h, gewährleistet sein kann.

Nach einer bevorzugten Ausführungsform des vorschlagsgemäßen Verfahrens kann vorgesehen sein, dass das Bauteil, insbesondere während der Linearbewegung der Beschichtungsdüse entlang der Führung, um seine eigene Achse rotiert wird. Die Rotationsbewegung kann gleichzeitig zu der Linearbewegung der Beschichtungsdüse stattfinden oder die Rotationsbewegung rotiert das Bauteil an eine Stelle, woraufhin die Linearbewegung der und Beschichtung mittels der Beschichtungsdüse stattfindet, woran anschließend wieder ein Weiterrotieren des Bauteils erfolgen kann. Diese Rotationsbewegung des Bauteils ermöglicht einen gleichmäßigen Beschichtungsauftrag über den gesamten Umfang des Bauteils. Insbesondere bei der Beschichtung von Monopiles, die häufig im Offshore-Bereich eingesetzt werden, ist eine gleichmäßige Beschichtung entscheidend, um den Schutz vor korrosiven Einflüssen wie Salzwasser zu gewährleisten.

Weiterhin kann bei dem vorschlagsgemäßen Verfahren vorgesehen sein, dass die Führung der Beschichtungsdüse gegenüber einem Fahrgestell des Lackierautomaten, insbesondere um eine vertikale Schwenkachse, schwenkbar gelagert ist. Diese schwenkbare Lagerung der Führung ermöglicht eine flexible Anpassung der Position der Beschichtungsdüse, um verschiedene Abschnitte des Bauteils effizient zu erreichen. Besonders vorteilhaft ist dies bei der Beschichtung von Monopiles, die unterschiedliche Durchmesser und Übergangsbereiche aufweisen können. Durch die Schwenkbewegung der Führung bzw. einer die Beschichtungsdüse und deren Führung aufweisenden Führungseinheit kann die Beschichtungsdüse optimal positioniert werden, um auch schwer zugängliche Bereiche des Monopiles zu beschichten. Das Verschwenken kann um eine vertikale Schwenkachse erfolgen, insbesondere wenn die Beschichtung entlang einer horizontalen Richtung erfolgt, also die Düsenaustrittsrichtung horizontal verläuft, wie es insbesondere bei einem Lackierautomaten in Form einer Außeneinheit zum Beschichten des Bauteils von außen der Fall sein kann. Oder aber das Verschwenken kann um eine horizontale Schwenkachse erfolgen, insbesondere wenn die Beschichtung entlang einer vertikalen Richtung oder entlang einer grundsätzlich nach unten weisenden Richtung in Richtung Untergrund erfolgt, also die Düsenaustrittsrichtung grundsätzlich nach unten gerichtet ist, wie es insbesondere bei einem Lackierautomaten in Form einer Inneneinheit zum Beschichten des Bauteils von innen der Fall sein kann.

Vorzugsweise kann der Lackierautomat einen Schwenkantrieb zum Verschwenken der Führung aufweisen. Der Schwenkantrieb ermöglicht eine präzise und kontrollierte Bewegung der Führung und damit Positionierung der Beschichtungsdüse, was die Effizienz und Genauigkeit des Beschichtungsprozesses weiter verbessert. Insbesondere bei der Beschichtung von Monopiles, die eine komplexe Geometrie aufweisen, ist die Fähigkeit, die Führung der Beschichtungsdüse gezielt zu verschwenken, von großem Vorteil. Dies ermöglicht eine vollständige und gleichmäßige Beschichtung aller Bereiche des Monopiles, ohne dass umfangreiche manuelle Anpassungen erforderlich sind.

Nach einer bevorzugten Ausführungsform des vorschlagsgemäßen Verfahrens kann vorgesehen sein, dass der Lackierautomat, zum Beschichten eines benachbarten Abschnitts, durch den Automatenantrieb, insbesondere ferngesteuert, fortbewegt wird. Diese Fortbewegung des Lackierautomaten ermöglicht eine kontinuierliche und effiziente Beschichtung großer Flächen, ohne dass manuelle Eingriffe erforderlich sind. Besonders bei der Beschichtung von Monopiles, die eine erhebliche Länge aufweisen, ist die Fähigkeit des Lackierautomaten, sich automatisch zu bewegen, von großem Vorteil. Dies reduziert die Arbeitszeit und erhöht die Sicherheit, da das Fachpersonal nicht ständig in der Nähe des Beschichtungsprozesses sein muss.

Weiterhin kann bei dem vorschlagsgemäßen Verfahren vorgesehen sein, dass der Lackierautomat, zum Besprühen eines Abschnitts des Bauteils, auf einen ersten Abstand zum Bauteil, insbesondere ferngesteuert, herangefahren wird. Anschließend wird die Beschichtungsdüse, insbesondere eine die Beschichtungsdüse aufweisende Führungseinheit, in Düsenaustrittsrichtung gesehen auf einen finalen Abstand zum Bauteil für das Besprühen verfahren. Diese präzise Positionierung der Beschichtungsdüse wird vorzugsweise durch einen Schwenkantrieb des Lackierautomaten ermöglicht und mithilfe eines Messens eines Abstands zwischen der Beschichtungsdüse und/oder der Führungseinheit zu dem Bauteil durch mindestens zwei Abstandssensoren kontrolliert. Diese Sensoren gewährleisten eine optimale Beschichtungsqualität, indem sie sicherstellen, dass die Düse stets im idealen Abstand zur Oberfläche des Bauteils positioniert ist. Dies ist besonders wichtig bei der Beschichtung von Monopiles, um eine gleichmäßige und hochwertige Beschichtung zu erzielen.

Eine weitere bevorzugte Ausführungsform des vorschlagsgemäßen Verfahrens betrifft die Lackierung des Innenraums eines Monopiles. Hierbei kann das Bauteil ein Monopile sein, und der Lackierautomat eine Inneneinheit zum Lackieren des Innenraums des Monopiles. Ein Abschnitt größeren Durchmessers und/oder ein Abschnitt kleineren Durchmessers des Monopiles werden bzw. wird zumindest teilweise mittels der Inneneinheit mit einer horizontal ausgerichteten und die Beschichtungsdüse aufweisenden Führungseinheit lackiert, während ein konischer Übergangsabschnitt des Monopiles mit der Führungseinheit aus der horizontalen Ausrichtung, insbesondere durch einen Schwenkantrieb des Lackierautomaten, heraus geschwenkt zumindest teilweise lackiert wird. Diese Fähigkeit, sowohl den Innenraum als auch komplexe Übergangsbereiche des Monopiles effizient zu beschichten, stellt sicher, dass alle Bereiche des Monopiles optimal vor korrosiven Einflüssen geschützt sind. Die horizontale Ausrichtung der Führungseinheit ermöglicht eine gleichmäßige Beschichtung gleichmäßiger Innenflächen, während die Schwenkfunktion eine flexible Anpassung an unterschiedliche Geometrien des Monopiles bzw. Formenübergänge (etwa im Bereich eines konischen Übergangsbereichs) erlaubt.

Nach einer bevorzugten Ausführungsform des vorschlagsgemäßen Lackierautomaten kann vorgesehen sein, dass die Beschichtungsdüse zusätzlich zu der Linearbewegung entlang der Führung in ihrer Ausrichtung, insbesondere gegenüber einem Fahrgestell des Lackierautomaten, verstellbar eingerichtet ist. Dies ermöglicht eine flexible Anpassung der Position der Beschichtungsdüse, um verschiedene Abschnitte des Bauteils effizient zu erreichen. Besonders vorteilhaft ist dies bei der Beschichtung von Monopiles, die unterschiedliche Durchmesser und Übergangsbereiche aufweisen können. Durch die verstellbare Ausrichtung der Beschichtungsdüse muss nicht der Lackierautomat selbst stets optimal positioniert werden, sondern kann eine Art Selbstausrichtung durch den Lackierautomaten stattfinden, um auch anders geformte oder schwerer zugängliche Bereiche des Monopiles zu beschichten. Vorzugsweise ist die Führung gegenüber dem Fahrgestell des Lackierautomaten schwenkbar gelagert, insbesondere um eine vertikale Schwenkachse. Das Verschwenken kann um die vertikale Schwenkachse erfolgen, insbesondere wenn die Beschichtung entlang einer horizontalen Richtung erfolgt, also die Düsenaustrittsrichtung horizontal verläuft, wie es insbesondere bei einem Lackierautomaten in Form einer Außeneinheit zum Beschichten des Bauteils von außen der Fall sein kann. Oder aber das Verschwenken kann um eine horizontale Schwenkachse erfolgen, insbesondere wenn die Beschichtung entlang einer vertikalen Richtung oder entlang einer grundsätzlich nach unten weisenden Richtung in Richtung Untergrund erfolgt, also die Düsenaustrittsrichtung grundsätzlich nach unten gerichtet ist, wie es insbesondere bei einem Lackierautomaten in Form einer Inneneinheit zum Beschichten des Bauteils von innen der Fall sein kann. Der Lackierautomat kann einen Schwenkantrieb zum Verschwenken der Führung aufweisen, was die Effizienz und Genauigkeit des Beschichtungsprozesses weiter verbessert.

Weiterhin kann bei dem vorschlagsgemäßen Lackierautomaten vorgesehen sein, dass dieser mit einem oder mit mindestens zwei Abstandssensoren zur Kontrolle der Ausrichtung des Lackierautomaten und der Beschichtungsdüse in Relation zum Bauteil ausgestattet ist. Abstandssensoren gewährleisten hierbei eine optimale Beschichtungsqualität, indem sie sicherstellen, dass die Düse stets im idealen Abstand zur Oberfläche des Bauteils positioniert ist. Der bzw. die Abstandssensor/- en kann/können zum Messen eines Abstands zwischen der Beschichtungsdüse und/oder einer die Beschichtungsdüse aufweisenden Führungseinheit zu dem Bauteil eingerichtet sein, insbesondere an einem oder an beiden Enden der Linearbewegung der Beschichtungsdüse entlang der Führung (insbesondere bei einem Lackierautomaten in Form einer Außeneinheit). Alternativ kann der/können die Abstandssensor/-en zum Messen eines seitlichen Abstands des Lackierautomaten zu dem Bauteil eingerichtet sein, insbesondere zur Detektion einer Querstellung des Lackierautomaten (insbesondere bei einem Lackierautomaten in Form einer Inneneinheit). Diese präzise Abstandskontrolle ist besonders wichtig bei der Beschichtung von Monopiles, um eine gleichmäßige und hochwertige Beschichtung zu erzielen. Der bzw. die Abstandssensor/-en können steuerungs- bzw. regelungstechnisch mit einem/dem Schwenkantrieb zum Verstellen der Führung der Beschichtungsdüse gekoppelt sein, um den Abstand der Beschichtungsdüse auch an die Messung angepasst verstellen zu können.

Eine weitere bevorzugte Ausführungsform des vorschlagsgemäßen Lackierautomaten betrifft die Ausstattung mit einer Absaugvorrichtung zum Absaugen von Beschichtungsmaterialstaub. Diese Vorrichtung trägt dazu bei, die Arbeitsumgebung sauber zu halten und die Qualität der Beschichtung zu verbessern, indem sie überschüssiges Beschichtungsmaterial entfernt und damit vor allem die Gefahr eines oversprays erheblich reduziert. Vorzugsweise weist die die Beschichtungsdüse aufweisende Führungseinheit die Absaugvorrichtung auf. Die Absaugvorrichtung kann oberhalb und/oder unterhalb der Beschichtungsdüse angeordnet sein, insbesondere im Wesentlichen über die gesamte Breite entlang der Linearbewegung der Beschichtungsdüse entlang der Führung. Diese Anordnung stellt sicher, dass der gesamte Bereich, in dem die Beschichtung erfolgt, effektiv von Staub und überschüssigem Material befreit wird, was die Effizienz und Qualität des Beschichtungsprozesses weiter erhöht. Besonders bei der Beschichtung von Monopiles, die eine große Fläche und komplexe Geometrien aufweisen, ist die Absaugvorrichtung von großem Vorteil, um eine saubere und gleichmäßige Beschichtung zu gewährleisten.

Nach einer bevorzugten Ausführungsform des vorschlagsgemäßen Lackierautomaten kann vorgesehen sein, dass die Beschichtungsdüse aus der die Beschichtungsdüse aufweisenden Führungseinheit hervorragt. Insbesondere kann die Beschichtungsdüse gegenüber einer Vorderseite einer Absaugvorrichtung in Düsenaustrittsrichtung gesehen hervorstehen. Diese Anordnung ermöglicht eine optimale Positionierung der Beschichtungsdüse, um eine gleichmäßige und präzise Beschichtung zu gewährleisten. Durch das Hervorragen der Düse wird sichergestellt, dass das Beschichtungsmaterial ohne Hindernisse auf die Oberfläche des Bauteils aufgetragen wird, was die Qualität der Beschichtung verbessert. Besonders bei der Beschichtung von Monopiles, die eine große Fläche und komplexe Geometrien aufweisen, ist diese Anordnung von Vorteil, um eine vollständige und gleichmäßige Beschichtung zu erzielen. Vorteilhaft ist die Absaugvorrichtung gegenüber der Beschichtungsdüse zurückversetzt, sodass effizient entstehender Lackstaub unmittelbar zielgerecht abgesaugt werden kann.

Weiterhin kann bei dem vorschlagsgemäßen Lackierautomaten vorgesehen sein, dass der Automatenantrieb eingerichtet ist, den Lackierautomaten zum Beschichten eines benachbarten Abschnitts, insbesondere ferngesteuert, fortzubewegen. Diese Fähigkeit zur automatischen Fortbewegung des Lackierautomaten ermöglicht eine kontinuierliche und effiziente Beschichtung großer Flächen, ohne dass manuelle Eingriffe erforderlich sind. Besonders bei der Beschichtung von Monopiles, die eine erhebliche Länge aufweisen, ist die Fähigkeit des Lackierautomaten, sich automatisch zu bewegen, von großem Vorteil. Dies reduziert die Arbeitszeit und erhöht die Sicherheit, da das Fachpersonal nicht ständig in der Nähe des Beschichtungsprozesses sein muss.

Eine weitere bevorzugte Ausführungsform des vorschlagsgemäßen Lackierautomaten betrifft die Ausstattung mit einem Fahrgestell, wobei zumindest ein Beschichtungsmaterialversorgungssystem auf dem Fahrgestell angeordnet ist. Dieses Versorgungssystem umfasst insbesondere zumindest einen Tank mit Beschichtungsmaterial und eine Pumpeneinheit. Die Anordnung des Versorgungssystems auf einer Plattform des Fahrgestells stellt eine möglichst umfassende mobile Einheit bereit, die das Gewerk auf Baustellen ohne sonderangefertigte Lackier-hallen durchführbar macht. Durch die Integration des Versorgungssystems in den Lackierautomaten wird die Mobilität und Flexibilität des Lackierautomaten erhöht, was die Effizienz des Beschichtungsprozesses weiter verbessert.

Nach einer bevorzugten Ausführungsform des vorschlagsgemäßen Lackierautomaten kann vorgesehen sein, dass die Beschichtungsdüse, insbesondere die die Beschichtungsdüse aufweisende Führungseinheit, vertikal verfahrbar eingerichtet ist. Diese vertikale Verfahrbarkeit wird vorzugsweise durch einen Vertikalantrieb ermöglicht, der die Führungseinheit an einem Portal des Lackierautomaten höhenverschiebbar führt. Diese Funktion erlaubt eine präzise Anpassung der Höhe der Beschichtungsdüse, um verschiedene Abschnitte des Bauteils effizient zu erreichen bzw. um grundsätzlich unterschiedliche Bauteile unterschiedlicher Abmessungen effizient beschichten zu können. Besonders bei der Beschichtung von Monopiles, bei denen die Beschichtung in einer großen Höhe durchzuführen sind, indem die Beschichtungsdüse idealerweise von der Seite her auf die Mitte des Durchmessers des in der Regel auf Drehböcken gelagerten Monopiles zu bringen ist, in anderen Worten also hoch bis zur Höhe der Rotationsachse des drehbar gelagerten Monopiles, ist die vertikale Verfahrbarkeit vorteilhaft.

Weiterhin kann bei dem vorschlagsgemäßen Lackierautomaten vorgesehen sein, dass dieser mit einem Portal zum Tragen der Beschichtungsdüse ausgestattet ist. Das Portal dient dazu, die Beschichtungsdüse oder die die Beschichtungsdüse aufweisende Führungseinheit relativ zum Bauteil zu positionieren. Diese präzise Positionierung ist entscheidend für die Qualität des Beschichtungsprozesses. Vorzugsweise ist das Portal so eingerichtet, dass es zum Wechseln des Lackierautomaten in einen zusammengepackten Transportzustand in einen Basisteil sowie einen Oberteil teilbar ist. Diese Teilbarkeit des Portals ermöglicht eine einfache und effiziente Handhabung zum Transport des Lackierautomaten, was die Flexibilität und Mobilität des Geräts erhöht und somit seine Einsatzmöglichkeiten auf unterschiedlichen Baustellen vereinfacht.

Eine weitere bevorzugte Ausführungsform des vorschlagsgemäßen Lackierautomaten betrifft die Anordnung der Beschichtungsdüse an einer Rückseite des Lackierautomaten, sodass das Beschichten nach unten in Richtung Untergrund erfolgt. Diese Anordnung ermöglicht eine effiziente Beschichtung von Flächen, die sich unterhalb des Lackierautomaten befinden, und ist besonders vorteilhaft bei der Beschichtung eines Innenraums von Monopiles, da die Lackierautomaten sodann im hohlen Innenraum des Monopiles selbst stehen bzw. verfahren und dort die Beschichtungsarbeiten durchführen können. Vorteilhaft kann sodann auch weniger Lackstaub entstehen bzw. dieser zielgerichtet am Ort der Entstehung abgesaugt werden, ohne dass andere weiter unten liegende Bereiche des Bauteils betroffen sein können.

Nach einer bevorzugten Ausführungsform des vorschlagsgemäßen Lackierautomaten kann vorgesehen sein, dass dieser mit einem Neigungssensor zur Detektion einer Schieflage des Lackierautomaten und/oder der Führung der Beschichtungsdüse ausgestattet ist. Der Neigungssensor ermöglicht eine präzise Erkennung von Schieflagen, die während des Beschichtungsprozesses auftreten können. Diese Funktion ist besonders wichtig bei der Beschichtung von Innenräumen von sich drehend gelagerten Monopiles, da hier die Inneneinheit im Innenraum des Monopiles angeordnet sein und Gefahr laufen kann, mitgedreht werden und somit in eine Schieflage geraten zu können. Durch die Detektion der Schieflage wird sichergestellt, dass der Lackierautomat stets in einer optimalen Position bleibt, um eine gleichmäßige Beschichtung zu gewährleisten. Vorzugsweise ist der Neigungssensor mit einem Seitenantrieb zur Seitwärtsfahrt des Lackierautomaten regelungs- bzw. steuerungstechnisch gekoppelt, um die Schieflage auszugleichen. Dies erhöht die Stabilität und Effizienz des Beschichtungsprozesses.

Weiterhin kann bei dem vorschlagsgemäßen Lackierautomaten vorgesehen sein, dass dieser mit einem Seitenantrieb zur Seitwärtsfahrt ausgestattet ist, insbesondere durch Seitenräder des Lackierautomaten. Der Seitenantrieb ermöglicht eine flexible Bewegung des Lackierautomaten in seitlicher Richtung, was wiederum die Stabilität der Stellung des Lackierautomaten und damit die Präzision des Beschichtungsvorgangs verbessern kann. Besonders bei der Beschichtung von Innenräumen von Monopiles ist die Fähigkeit zur Seitwärtsfahrt von großem Vorteil. Dies stellt sicher, dass der grundsätzlich auf einem sich drehenden Untergrund angeordnete Lackierautomat seine Position halten kann, beispielsweise auch ohne, dass umfangreiche manuelle Anpassungen erforderlich wären.

Eine weitere bevorzugte Ausführungsform des vorschlagsgemäßen Lackierautomaten betrifft die Ausstattung mit Längsrädern zum Fortbewegen des Lackierautomaten in Vorschubrichtung durch den Automatenantrieb, um benachbarte Abschnitte des Bauteils zu beschichten. Diese Längsräder ermöglichen eine kontinuierliche und effiziente Bewegung des Lackierautomaten entlang des Bauteils, was die Arbeitszeit reduziert. Vorzugsweise ist der Lackierautomat zusätzlich mit Seitenrädern ausgestattet, die eine Seitwärtsfahrt ermöglichen, um eine Schieflage auszugleichen. Die Seitenräder umfassen wenigstens ein, insbesondere zwei, angetriebene Seitenräder zur Seitwärtsfahrt durch den Seitenantrieb. Diese Seitenräder sind vertikal höhenverstellbar eingerichtet, um zwischen einem Passivzustand ohne Eingriff mit dem Untergrund und einem Aktivzustand in Eingriff mit dem Untergrund verstellt werden zu können. Diese Funktion erhöht die Flexibilität und Mobilität des Lackierautomaten, was besonders bei der Beschichtung von Monopiles von großem Vorteil ist.

Schließlich kann bei dem vorschlagsgemäßen Lackierautomaten vorgesehen sein, dass die Längsräder im Wesentlichen grundsätzlich senkrecht zu den Seitenrädern ausgerichtet sind. Diese Ausrichtung stellt sicher, dass der Lackierautomat stabil und effizient entlang des Bauteils bewegt werden und arbeiten kann, ohne dass das Gewerk durch eine Schieflage des Lackierautomaten beeinträchtigt wird. Besonders bei der Beschichtung von Monopiles, die eine erhebliche Länge und Geometrien mit Ungleichmäßigkeiten (konischer Übergangsbereich) aufweisen, ist diese stabile und präzise Bewegung entscheidend für die Qualität und Effizienz des Beschichtungsprozesses.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Figuren zeigt:
- Figur 1: zeigt ein Monopile in einer perspektivischen Ansicht, sowie zwei vorschlagsgemäße Lackierautomaten, im Begriff den Monopile von außen und innen zu beschichten;
- Figur 2: einen vergrößerten Ausschnitt aus Fig. 1, und zwar auf den Lackierautomaten in Form der Außeneinheit;
- Figur 3: eine Draufsicht auf den Lackierautomaten in Form der Außeneinheit, jedoch an einer abweichenden Stelle den Monopile beschichtend im Vergleich zu der Situation gemäß Fig. 1 und 2;
- Figur 4: den Lackierautomaten in Form der Außeneinheit in einer separaten Ansicht schräg von oben sowie in einem zusammengepackten Zustand;
- Figur 5: einen vergrößerten Ausschnitt aus Fig. 1, und zwar auf den Lackierautomaten in Form der Inneneinheit;
- Figur 6: eine perspektivische Ansicht auf den Lackierautomaten in Form der Inneneinheit, jedoch an einer abweichenden Stelle den Monopile beschichtend im Vergleich zu der Situation gemäß Fig. 1 und 5; und
- Figur 7: den Lackierautomaten in Form der Inneneinheit in einer separaten Ansicht schräg von hinten mit hochgeschwenkter Führungseinheit.

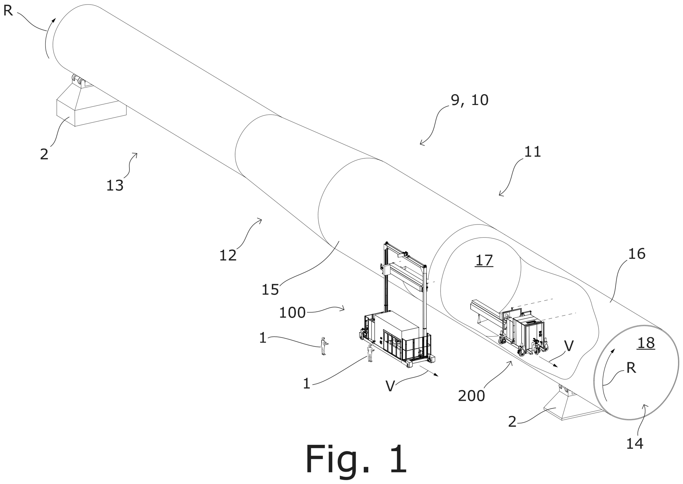

Fig. 1 zeigt einen Monopile 10, also einen Stahlpfahl als Gründungsstruktur für Offshore-Bauwerke, beispielsweise eine Offshore-Windkraftanlage. Der Monopile 10 wird in Fig. 1 gerade einem Beschichtungsprozess sowohl von außen als auch von innen unterzogen, indem der Monopile 10 zwecks Korrosionsschutzes lackiert wird. Grundsätzlich kann der Monopile 10 beispielsweise zwischen 1.000 t und 2.500 t wiegen.

Vorliegend weist der Monopile 10 eine Gesamtlänge von 100 m auf. Dabei hat der Monopile 10 einen Abschnitt größeren Durchmessers 11, wobei der Außendurchmesser hier 10 m beträgt, sowie weiterhin einen konischen Übergangsabschnitt 12, welcher in einen Abschnitt kleineren Durchmessers 13, vorliegend mit einem Außendurchmesser von 7 m, überleitet. Der Monopile 10 weist einen Innenraum 14 auf, der hohl ist, sodass auch hier Lackierarbeiten stattfinden müssen, um einen Korrosionsschutz zu gewährleisten.

Für eine Lackierung wird der Monopile 10 an seinen Enden jeweils auf einen Drehbock 2 gelagert, wobei die Drehböcke 2 den Monopile 10 entlang der Rotationsrichtung R rotieren können, sodass die zu lackierenden Flächen über den gesamten Umfang bearbeitet werden können.

Aufgrund der immensen Dimensionen des Bauteils und aufgrund seines Einsatzes im Offshore-Bereich und damit in einer korrosionsintensiven Umgebung ist es einerseits essenziell, dass der Monopile 10 möglichst lange den rauen Offshore Bedingungen standhalten kann, sowie andererseits, dass die aufgebrachte Beschichtung als Korrosionsschutz höchstens Standards entspricht. Hierzu ist etwa eine gleichmäßige Schichtdicke des aufgetragenen Beschichtungsmaterials von hoher Bedeutung, sowie ferner, dass sich möglichst wenig bzw. möglichst kein sogenannter overspray bildet, also kein Beschichtungs- bzw. Lackstaub auf dem noch feuchten Beschichtungsauftrag niederlässt und so die finale Oberflächengüte des Monopiles 10 reduzieren würde. Um diesen Anforderungen gerecht zu werden, wird gemäß Stand der Technik ein großer Aufwand betrieben. So kommt viel erfahrenes Fachpersonal zum Einsatz, das händisch mit Spritzpistolen einen möglichst gleichmäßigen Lackauftrag vornehmen muss. Auch der Aufwand zur Bereitstellung der entsprechenden Rahmenbedingungen auf der Baustelle ist hoch, um ein solches Gewerk durchzuführen. So wird in der Regel der gesamte Monopile 10 gemäß Stand der Technik mit Beschichtungsmaterial besprüht, indem der Monopile 10 zumindest stets abschnittsweise oder gar im Ganzen mit einem Malergerüst umgeben wird, auf welchem Gerüst das Fachpersonal seine Lackierarbeiten sodann durchführt. Auch eigens angepasste Hallen kommen zum Einsatz, die besondere Rahmenbedingungen zur Verfügung zu stellen, um den overspray möglichst zu vermeiden.

Hier schafft die vorliegende Erfindung Abhilfe, indem das vorschlagsgemäße Verfahren zum Beschichten bzw. Lackieren des Monopiles 10 auf den vorschlagsgemäßen Lackierautomaten 100 bzw. 200 setzt. Von dem vorschlagsgemäßen Lackierautomaten sind in Fig. 1 zwei unterschiedliche, voneinander unabhängige Varianten dargestellt: zum einen eine Außeneinheit 100, die für die Lackierung des äußeren Umfangs, also der äußeren Mantelflächen, des Monopiles 10 zumindest größtenteils verantwortlich ist, sowie zum anderen eine Inneneinheit 200, die für die Lackierung des inneren Umfangs, der inneren Mantelflächen, im Innenraum 14 des Monopiles 10 zumindest größtenteils sorgt.

Über die vorschlagsgemäßen Lackierautomaten 100 und 200 wird ein Automatisierungsgrad erreicht, der einerseits den Einsatz von so viel Fachpersonal nicht mehr notwendig werden lässt, dabei zudem auch die Notwendigkeit hinsichtlich des Führens von Spritzpistolen und des Durchführens von Lackierarbeiten gesondert geschulten Personals wegfallen lässt bzw. stark reduziert, sowie andererseits die Lackierarbeiten auch in einer höheren Geschwindigkeit durchführbar macht. Weiterhin wird der sonstige Materialaufwand bzw. Aufwand zur Bereitstellung der Baustelle reduziert, da etwa keine Malergerüste mehr notwendig sind. Zudem kann die Güte des Lackauftrags einheitlicher als bei menschlichem Einsatz gestaltet werden, sowie auch die Gefahr des oversprays spezifisch durch gerätetechnische Anpassungen der Lackierautomaten 100 bzw. 200 reduziert werden.

Insofern sich nachfolgend nicht explizit auf die Außeneinheit 100 oder die Inneneinheit 200 bezogen wird, gelten die entsprechenden Merkmale und Aussagen für beide Einheiten und somit zumindest für ein Ausführungsbeispiel des vorschlagsgemäßen Lackierautomaten 100 bzw. 200 im Allgemeinen.

Der Lackierautomat 100 bzw. 200 ist eine mobile Einheit, die automatisch verfahrbar ist, etwa entlang der dargestellten Vorschubrichtungen V, sowie auch lenkbar ist. Der Lackierautomat 100 bzw. 200 ist selbstfahrend, über angetriebene Räder, wie später noch detaillierter beschrieben, und kann hierzu durch einzelne Personen 1 ferngesteuert und mithilfe seines Automatenantriebs 120 bzw. 220 relativ zu dem Monopile 10 verfahren werden. Zudem weist der Lackierautomat 100 bzw. 200 gemäß dargestellten und insofern bevorzugten Ausführungsbeispiel bereits alle wesentlichen Einheiten zur Durchführung der Lackierarbeiten auf, wie etwa das gesamte Farbeversorgungssystem inklusive Tanks, Pumpen, die in einem Schrank 165 bzw. 265 aus Schutzgründen u.a. vor Verschmutzung angeordnet sind, sowie alle notwendigen elektronischen Komponenten und auch ein System zur Vermeidung des oversprays Teil des Lackierautomaten 100 bzw. 200, indem diese gesamten Komponenten auf einem Fahrgestell 160 bzw. 260 des Lackierautomaten 100 bzw. 200 angeordnet sind. Damit muss lediglich eine Energieversorgung von extern, etwa durch Anbinden eines Stromkabels, erfolgen. Dadurch wird die Flexibilität erhöht sowie das gesamte Gewerk unabhängiger von aufwendigen sonderangefertigten Lackier-Hallen gemacht. Die mobilen Lackierautomaten 100 und 200 können beispielsweise an den Ort der Monopile-Herstellung gebracht werden und dort die finalen Lackierarbeiten durchführen.

In dem dargestellten Ausführungsbeispiel der Fig. 1 ist der Monopile 10 sowohl außen als auch innen schon zu weiten Teilen lackiert. Die Außeneinheit 100 hat den äußeren Lackauftrag 15 bereits aufgebracht und ist im Begriff, den restlichen Teil der äußeren Mantelfläche, den unlackierten äußeren Abschnitt 16, zu lackieren. Die Außeneinheit 100 hat dazu an dem Ende des Abschnitts kleineren Durchmessers 13 angefangen und lackiert jeweils Abschnitte von, gemäß vorliegendem Ausführungsbeispiel 6 m Breite, jeweils über den gesamten Umfang, wozu der Monopile 10 entlang der Rotationsrichtung R rotiert.

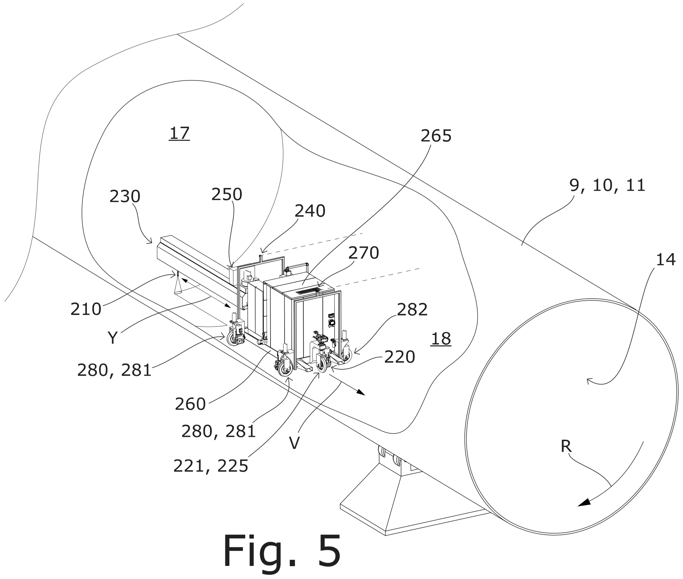

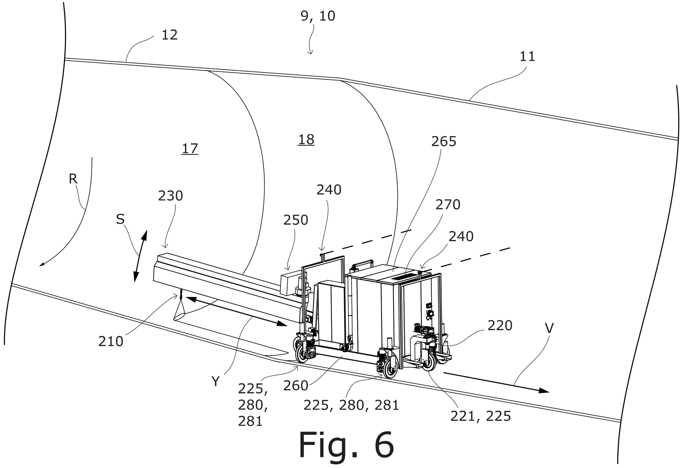

Die Inneneinheit 200 wiederum hat den inneren Lackauftrag 17 bereits aufgebracht und ist im Begriff, den restlichen Teil der inneren Mantelfläche, den unlackierten inneren Abschnitt 18, zu lackieren. Die Inneneinheit 200 hat dazu ebenfalls an dem Ende des Abschnitts kleineren Durchmessers 13 angefangen, und zwar indem sie über einen Gabelstapler dort in den hohlen Innenraum 14 gesetzt wurde. Auch die Inneneinheit 200 lackiert jeweils Abschnitte von, gemäß vorliegendem Ausführungsbeispiel 6 m Breite, jeweils über den gesamten Umfang, wozu der Monopile 10 entlang der Rotationsrichtung R rotiert. Die Inneneinheit 200 verfährt hierzu grundsätzlich entlang der Vorschubrichtung V mit ihrer Radanordnung 225 auf dem Untergrund in Form der inneren Mantelfläche des Monopiles 10. Sie steht also auf der grundsätzlich zu lackierenden Innenfläche selbst, im Innenraum 14 des Monopiles 10. Die Lackierarbeiten führt die Inneneinheit 200 daher auch auf ihrer Rückseite durch, indem ihre entsprechende Beschichtungsdüse 210 und die die Beschichtungsdüse 210 aufweisende Führungseinheit 230 derart an der Rückseite des Lackierautomaten 200 angeordnet sind, dass das Beschichten nach unten in Richtung Untergrund und damit eben in Richtung der inneren Mantelfläche des Monopiles 10 erfolgt (siehe hierzu vor allem Fig. 5 und Fig. 6).

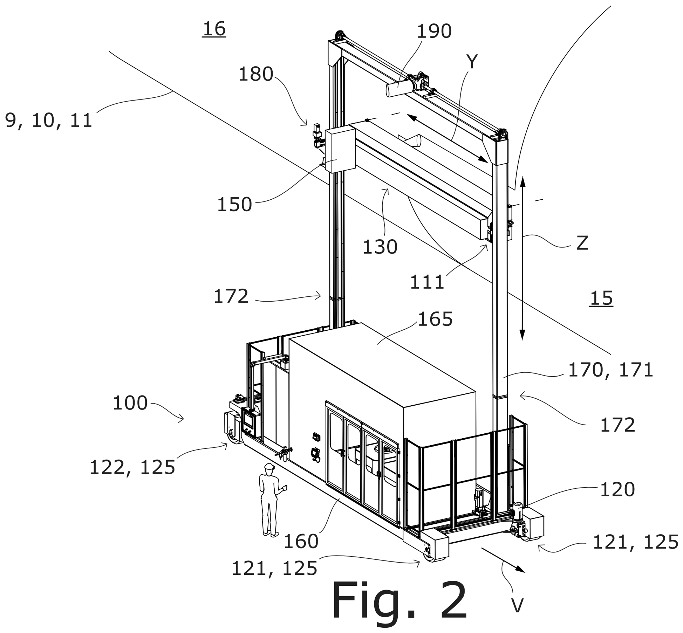

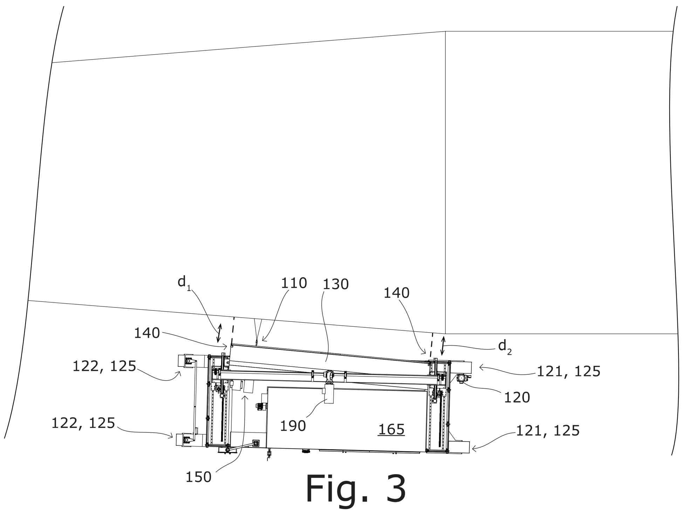

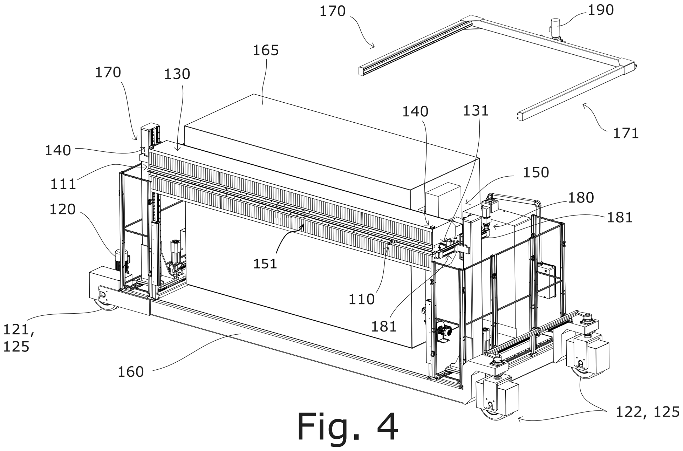

Fig. 2 bis Fig. 4 zeigen ein Ausführungsbeispiel der Außeneinheit 100 des Lackierautomaten in verschiedenen Zuständen bzw. Lackiersituationen. Fig. 2 ist ein vergrößerter Ausschnitt auf die Außeneinheit 100, wie sie in Fig. 1 gerade zum Einsatz kommt. Fig. 3 ist eine Draufsicht auf die Außeneinheit 100, wie sie den Monopile 10 an einer abweichenden Stelle im Vergleich zu der Situation gemäß Fig. 1 und 2 beschichtet, und zwar an dem konischen Übergangsabschnitt 12. Fig. 4 zeigt die Außeneinheit 100 in einer separaten Ansicht schräg von oben in einem zusammengepackten Zustand, wie er für den Weitertransport der Außeneinheit 100, etwa zu einer anderen Baustelle zum Beschichten eines anderen Monopiles, gewählt wird. Die vorangehende und insbesondere nachfolgende Beschreibung in Bezug auf die Außeneinheit 100 kann also in Bezug zu allen genannten Figuren gesetzt werden.

Die Außeneinheit 100 umfasst eine Beschichtungsdüse 110, die während der Durchführung des Beschichtungsvorgangs durch einen Linearantrieb 111 entlang einer Führung 131 in der Querrichtung Y vor- und zurück verfahren wird. Die Führung 131 ist eine Führungsschiene und sie ist gegenüber einem Fahrgestell 160 des Lackierautomaten 100 schwenkbar gelagert, und zwar um eine vertikale Schwenkachse. Der Lackierautomat 100 weist hierzu einen Schwenkantrieb 180 zum Verschwenken der Führung 131 bzw. einer gesamten, die Beschichtungsdüse 110 und Führung 131 aufweisenden, kastenförmigen Führungseinheit 130 auf. Der Schwenkantrieb 180 verschiebt in dem vorliegenden Ausführungsbeispiel die Führungseinheit 130 in Draufsicht an ihrer linken Seite (Fig. 3) entlang der Schiene 181 nach vorne. Grundsätzlich kann entweder an der gegenüberliegenden Seite der Führungseinheit 130 (rechts in Draufsicht, Fig. 3) eine Achse zur Bereitstellung der vertikalen Schwenkachse vorgesehen sein, sodass lediglich die linke Seite nach vorne bzw. zurück geschwenkt wird, oder aber dort an der rechten Seite ist auch eine Schiene vorgesehen, entlang welcher die gegenüberliegende (in Draufsicht gesehen rechte) Seite der Führungseinheit 130 auch vor- und zurück verschoben werden kann, wobei sodann die vertikale Schwenkachse im Wesentlichen mittig (in Draufsicht auf die Führungseinheit 130) ist und ein Längenausgleich aufgrund der gegebenenfalls gleichzeitig links und rechts erfolgenden Vor- bzw. Zurück-Bewegung notwendig werden kann. Durch die grundsätzliche Verschwenkbarkeit der Führung 131 und damit Verstellbarkeit der Beschichtungsdüse 110 in Relation zum Fahrgestell 160 kann im Ergebnis die Beschichtungsdüse 110 für ihren gesamten Verfahrweg entlang der Führung 131 in einen gleichmäßigen Abstand d₁ bzw. d₂ zu der Bauteiloberfläche gebracht werden, wie aus Fig. 3 besonders ersichtlich wird. Dies ist insbesondere zur Beschichtung des konischen Übergangsabschnitts 12 des Monopiles 10 von Vorteil, da dort grundsätzlich das Fahrgestell 160 weiterhin eine im Wesentlichen parallele Ausrichtung zur Achse des Monopiles 10 aufweisen kann und die Beschichtung der schräg hierzu verlaufenden Mantelfläche des konischen Übergangsabschnitt über eine entsprechende Schrägstellung der Führungseinheit 130 durch Verschwenken um die vertikale Schwenkachse erfolgen kann. Die Abstände d₁ bzw. d₂ zwischen Führungseinheit 130 und zu beschichtender Oberfläche können durch die beiden Abstandssensoren 140 gemessen werden, welche damit die Ausrichtung der Beschichtungsdüse 110 in Relation zum Bauteil 9 kontrollieren (vgl. die gestrichelte, die Messung repräsentierenden Linien in den Fig. 1 bis Fig. 3).

Zudem ist die Führungseinheit 130, die die Beschichtungsdüse 110 aufweist, mit einer Absaugvorrichtung 150 ausgestattet, die mit ihren Absaugeinheiten benachbart zu der Beschichtungsdüse 110 bzw. deren Führung 131, und zwar konkret oberhalb und unterhalb der Beschichtungsdüse 110 bzw. ihrer Führung 131, angeordnet ist, um Beschichtungsmaterialstaub abzusaugen, wie etwa in Fig. 4 ersichtlich. Hierdurch wird ein overspray unterbunden oder zumindest stark reduziert. Die Beschichtungsdüse 110 ragt aus der Führungseinheit 130 hervor und steht gegenüber der Vorderseite 151 der Absaugvorrichtung 150 in Düsenaustrittsrichtung gesehen hervor.

Die Außeneinheit 100 ist durch den Automatenantrieb 120 entlang der Vorschubrichtung V bzw. ganz grundsätzlich auch über die lenkbare Radanordnung 125 frei im Raum verfahrbar. Der Automatenantrieb 120 kann ein Vorderrad 121 bzw. beide Vorderräder 121 antreiben, während die Hinterräder 122 passive Räder sind bzw. für die Lenkung des Lackierautomaten 100 lenkbar eingerichtet sind.

Die Führung 131 bzw. damit die Beschichtungsdüse 110 und grundsätzlich die gesamte Führungseinheit 130 sind an einem Portal 170 in Vertikalrichtung Z verschiebbar gelagert. Die Verschiebbarkeit wird über den Vertikalantrieb 190 gewährleistet. Damit kann die Beschichtungsdüse 110 auf die notwendige Arbeitshöhe gebracht werden. Zudem ist auch möglich, die Führungseinheit 130 im Gesamten bis zum Fahrgestell 160 herunterzufahren, und zwar beispielsweise bis auf oder fast auf die entsprechende Plattform des Fahrgestells 160. Dadurch kann die gesamte Außeneinheit 100 in einen kompakteren zusammengepackten Zustand gebracht werden, wie er in Fig. 4 beispielhaft dargestellt ist. Das Portal 170 ist zum Wechseln des Lackierautomaten 100 in diesen zusammengepackten Transportzustand in ein Basisteil sowie ein Oberteil 171 an den Trennstellen 172 teilbar eingerichtet.

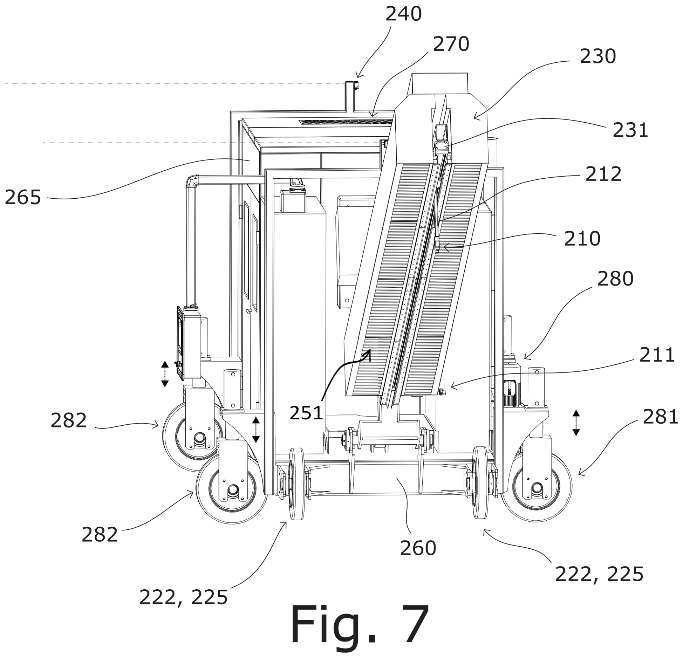

Fig. 5 bis Fig. 7 zeigen ein Ausführungsbeispiel der Inneneinheit 200 des Lackierautomaten in verschiedenen Ansichten bzw. Lackiersituationen. Fig. 5 ist ein vergrößerter Ausschnitt auf die Inneneinheit 200, wie sie in Fig. 1 gerade zum Einsatz kommt. Fig. 6 zeigt eine perspektivische Ansicht auf die Inneneinheit 200, wie sie den Monopile 10 an einer abweichenden Stelle im Vergleich zu der Situation gemäß Fig. 1 und 5 beschichtet, und zwar an dem konischen Übergangsabschnitt 12. Fig. 7 zeigt die Inneneinheit 200 in einer separaten Ansicht schräg von hinten mit hochgeschwenkter Führungseinheit 230. Die vorangehende und insbesondere nachfolgende Beschreibung in Bezug auf die Inneneinheit 200 kann also in Bezug zu allen genannten Figuren gesetzt werden.

Die Inneneinheit 200 umfasst eine Beschichtungsdüse 210, die während der Durchführung des Beschichtungsvorgangs durch einen Linearantrieb 211 entlang einer Führung 231 in der Querrichtung Y vor- und zurück verfahren wird. Die Führung 231 ist eine Führungsschiene und sie ist gegenüber einem Fahrgestell 260 des Lackierautomaten 200 schwenkbar gelagert, und zwar um eine horizontale Schwenkachse entlang der Schwenkrichtung S (s. Fig. 6). Der Lackierautomat 200 weist hierzu einen Schwenkantrieb zum Verschwenken der Führung 231 bzw. der gesamten, die Beschichtungsdüse 210 und Führung 231 aufweisenden, kastenförmigen Führungseinheit 230 auf. Der Schwenkantrieb verkippt rückseitig an dem Lackierautomaten 200 die Führungseinheit 230 nach oben weg vom Untergrund bzw. unten hin zum Untergrund. Durch die grundsätzliche Verschwenkbarkeit der Führung 231 und damit Verstellbarkeit der Beschichtungsdüse 210 in Relation zum Fahrgestell 260 kann im Ergebnis die Beschichtungsdüse 210 in einen gleichmäßigen Abstand gegenüber der zu beschichtenden Bauteiloberfläche gebracht bzw. gehalten werden und damit etwa auch der konische Übergangsabschnitt 12 von innen beschichtet werden, während der Lackierautomat 200 bereits in dem Abschnitt größeren Durchmessers 11 steht, wie aus Fig. 6 besonders ersichtlich wird.

Zudem ist die Führungseinheit 230, die die Beschichtungsdüse 210 aufweist, mit einer Absaugvorrichtung 250 ausgestattet, die mit ihren Absaugeinheiten auf jeder Seite der Beschichtungsdüse 210 bzw. ihrer Führung 231 angeordnet ist, um Beschichtungsmaterialstaub abzusaugen, wie etwa in Fig. 7 ersichtlich. Die Beschichtungsdüse 210 ragt an einer Lanze 212 angebracht aus der Führungseinheit 230 hervor und steht gegenüber der Vorderseite 251 der Absaugvorrichtung 250 in Düsenaustrittsrichtung gesehen hervor.

Die Inneneinheit 200 weist zwei Abstandssensoren 240 auf, die an einer Oberseite des Lackierautomaten 200 montiert und zur Seite hin messend ausgerichtet sind und die die Ausrichtung der Beschichtungsdüse 210 bzw. der Führung 231 in Relation zum Bauteil 9 kontrollieren. Die Abstandssensoren 240 messen den Abstand zwischen, vorliegend, der Mitte des Fahrgestells 260 des Lackierautomaten 200 und damit auch zumindest indirekt der Führung 231 und der inneren Mantelfläche des zu beschichtenden Bauteils 9 in Form des Monopiles 10 seitlich neben dem Lackierautomaten 200. Damit kann eine gleichmäßige Beschichtung gewährleistet werden, denn über diese Messung kann eine Schrägstellung des gesamten Lackierautomaten 200 im Innenraum 14 des Monopiles 10, was einem gleichmäßigen Beschichtungsauftrag entgegenstehen könnte, umgehend detektiert und eine Korrektur eingeleitet werden.

Darüber hinaus weist der Lackierautomat 200 einen weiteren Sensor auf, indem die Inneneinheit 200 mit einem Neigungssensor 270 ausgestattet ist, welcher Neigungssensor 270 eine Schieflage des Lackierautomaten 200 bzw. der Führung 231 der Beschichtungsdüse 210 detektiert. Sollte sich die gesamte Inneneinheit 200, also deren gesamtes Fahrgestell 260, etwa aufgrund der Rotation des Monopiles 10 im Innenraum 14 etwas mitdrehen, sodass die Inneneinheit 200 nicht mehr am ihr tiefstmöglichen Punkt auf dem Untergrund in Form der inneren Mantelfläche des Monopiles 10 stehen würde, dann würde dies in einer entsprechenden Neigung der Inneneinheit 200 resultieren und der Neigungssensor 270 dies detektieren. Der Neigungssensor 270 ist mit einem Seitenantrieb 280 zur Seitwärtsfahrt des Lackierautomaten 200 gekoppelt, um eine solche Schieflage unmittelbar auszugleichen zu können. Die Inneneinheit 200 ist dafür grundsätzlich mit den Seitenrädern 281 und 282 ausgestattet, die eine entsprechende Seitwärtsfahrt der Inneneinheit 200 ermöglichen. Die Seitenräder 281 und 282 sind einerseits angetriebene Seitenräder 281 sowie auf der anderen Seite passive Seitenräder 282. Sämtliche vier Seitenräder 281 und 282 sind vertikal höhenverstellbar eingerichtet, und zwar jeweils über einen entsprechenden Antrieb, um zwischen einem Passivzustand ohne Eingriff mit dem Untergrund und einem Aktivzustand in Eingriff mit dem Untergrund verstellt werden zu können (vgl. hierzu die gepunkteten Doppelpfeile in Fig. 7). Die Radanordnung 285 der Inneneinheit 200 weist wiederum auch die Längsräder 221 und 222 auf, welche für den Kontakt mit und damit auch die Verfahrbarkeit der Inneneinheit 200 auf dem Untergrund verantwortlich sind, wenn die Seitenräder 281 und 282 nach oben hoch verstellt sind. Die Längsräder 221 und 222 sind grundsätzlich im Wesentlichen senkrecht zu den Seitenrädern 281 und 282 ausgerichtet, um die grundsätzlichen Bewegungen des Lackierautomaten 200 in die beiden senkrechten Richtungen zueinander zu gewährleisten. Das Vorder-Längsrad 221 ist lenkbar und somit die Inneneinheit 200 auch frei im Raum bewegbar, während die beiden Hinter-Längsräder 222 nicht lenkbar und passive Räder sind.

### Bezugszeichenliste

| | | | |
|---|---|---|---|
| 1 | Person | 240 | Abstandssensor |
| 2 | Drehbock | 250 | Absaugvorrichtung |
| 9 | Bauteil | 251 | Vorderseite (der Absaugvorrichtung) |
| 10 | Monopile | 260 | Fahrgestell |
| 11 | Abschnitt größeren Durchmessers | 265 | Schrank |
| 12 | konischer Übergangsabschnitt | 270 | Neigungssensor |
| 13 | Abschnitt kleineren Durchmessers | 280 | Seitenantrieb zur Seitwärtsfahrt |
| 14 | Innenraum | 281 | angetriebenes Seitenrad |
| 15 | äußerer Lackauftrag | 282 | passives Seitenrad |
| 16 | unlackierter äußerer Abschnitt | | |
| 17 | innerer Lackauftrag | d₁; d₂ | Abstand |
| 18 | unlackierter innerer Abschnitt | R | Rotationsrichtung |
| 100 | Außeneinheit (Lackierautomat) | S | Schwenkrichtung |
| 110 | Beschichtungsdüse | V | Vorschubrichtung |
| 111 | Linearantrieb | Y | Querrichtung |
| 120 | Automatenantrieb | Z | Vertikalrichtung |
| 121 | Vorderrad | | |
| 122 | Hinterrad | | |
| 125 | Radanordnung | | |
| 130 | Führungseinheit | | |
| 131 | Führung | | |
| 140 | Abstandssensor | | |
| 150 | Absaugvorrichtung | | |
| 151 | Vorderseite (der Absaugvorrichtung) | | |
| 160 | Fahrgestell | | |
| 165 | Schrank | | |
| 170 | Portal | | |
| 171 | Oberteil | | |
| 172 | Trennstelle | | |
| 180 | Schwenkantrieb | | |
| 181 | Schiene | | |
| 190 | Vertikalantrieb | | |
| 200 | Inneneinheit (Lackierautomat) | | |
| 210 | Beschichtungsdüse | | |
| 211 | Linearantrieb | | |
| 212 | Lanze | | |
| 220 | Automatenantrieb | | |
| 221 | Vorder-Längsrad | | |
| 222 | Hinter-Längsrad | | |
| 225 | Radanordnung | | |
| 230 | Führungseinheit | | |
| 231 | Führung | | |

## Patentansprüche

1. Verfahren zum Beschichten großflächiger Industrie- und Bauwerkskomponenten, insbesondere für den Außeneinsatz, vorzugsweise in korrosionsintensiven Umgebungen, besonders bevorzugt für den Offshore-Einsatz, wobei ein Bauteil (9) mit einer zusammenhängende Großfläche durch eine Beschichtungsdüse (110; 210) mit einem Beschichtungsmaterial besprüht wird,
**dadurch gekennzeichnet, dass**
ein Lackierautomat (100; 200) die Beschichtungsdüse (110; 210) aufweist und das Besprühen durchführt, indem ein Linearantrieb (111) des Lackierautomaten (100; 200) die Beschichtungsdüse (110; 210) entlang einer Führung (131; 231) des Lackierautomaten (100; 200) verfährt und dass der Lackierautomat (100; 200) einen Automatenantrieb (120; 220) zum Verfahren des Lackierautomaten (100; 200) aufweist.

2. Verfahren nach Anspruch 1, wobei das Bauteil (9), insbesondere während der Linearbewegung der Beschichtungsdüse (110; 210) entlang der Führung (131; 231), um seine eigene Achse rotiert wird, um einen Beschichtungsauftrag abschnittsweise über einen gesamten Umfang des Bauteils (9) durchzuführen.

3. Verfahren nach Anspruch 1 oder 2, wobei die Führung (131; 231) gegenüber einem Fahrgestell (160; 260) des Lackierautomaten (100; 200), insbesondere um eine vertikale Schwenkachse, schwenkbar gelagert ist;
wobei, vorzugsweise, der Lackierautomat (100; 200) einen Schwenkantrieb (180) zum Verschwenken der Führung (131; 231) aufweist.

4. Verfahren nach einem der vorhergehenden Ansprüche, wobei der Lackierautomat (100; 200), zum Beschichten eines benachbarten Abschnitts, durch den Automatenantrieb (120; 220), insbesondere ferngesteuert, fortbewegt wird.

5. Verfahren nach einem der vorhergehenden Ansprüche, wobei der Lackierautomat (100), zum Besprühen eines Abschnitts des Bauteils (9), auf einen ersten Abstand zum Bauteil (9), insbesondere ferngesteuert, herangefahren wird und sodann die Beschichtungsdüse (110), insbesondere eine die Beschichtungsdüse (110) aufweisende Führungseinheit (130), in Düsenaustrittsrichtung gesehen auf einen finalen Abstand zum Bauteil (9) für das Besprühen, insbesondere durch zumindest einen/den Schwenkantrieb (180) des Lackierautomaten (100), vorzugsweise mithilfe eines Messens eines Abstands (d₁; d₂) zwischen der Beschichtungsdüse (110) und/oder der Führungseinheit (130; 230) zu dem Bauteil (9) durch einen, weiter bevorzugt durch mindestens zwei, Abstandssensor/-en (140), vor oder zurück verfahren wird.

6. Verfahren nach einem der Ansprüche 1 bis 4, wobei das Bauteil (9) ein Monopile (10) und der Lackierautomat eine Inneneinheit (200) zum Lackieren eines Innenraums (14) des Monopiles (10) ist, wobei ein Abschnitt größeren Durchmessers (11) und/oder ein Abschnitt kleineren Durchmessers (13) des Monopiles (10) zumindest teilweise mittels der Inneneinheit (200) mit einer horizontal ausgerichteten und die Beschichtungsdüse (210) aufweisenden Führungseinheit (230) lackiert wird, während ein konischer Übergangsabschnitt (12) des Monopiles (10) mit der Führungseinheit (230) aus der horizontalen Ausrichtung, insbesondere durch einen/den Schwenkantrieb des Lackierautomaten (200), heraus geschwenkt zumindest teilweise lackiert wird.

7. Lackierautomat (100; 200) zum automatischen Beschichten großflächiger Industrie- und Bauwerkskomponenten, insbesondere für den Außeneinsatz, vorzugsweise in korrosionsintensiven Umgebungen, besonders bevorzugt für den Offshore-Einsatz, umfassend eine Beschichtungsdüse (110; 210), einen Linearantrieb (111) und eine Führung (131; 231), wobei der Linearantrieb (111) eingerichtet ist, die Beschichtungsdüse (110; 210) entlang der Führung (131; 231) des Lackierautomaten (100; 200) zu verfahren, sowie ferner umfassend einen Automatenantrieb (120; 220) zum Verfahren des Lackierautomaten (100; 200).

8. Lackierautomat (100; 200) nach Anspruch 7, wobei die Beschichtungsdüse (110; 210), zusätzlich zu der Linearbewegung entlang der Führung (131; 231), in ihrer Ausrichtung, insbesondere gegenüber einem Fahrgestell (160; 260) des Lackierautomaten (100; 200), verstellbar eingerichtet, vorzugsweise die Führung (131; 231), insbesondere gegenüber einem/dem Fahrgestell (160; 260) des Lackierautomaten (100; 200), schwenkbar gelagert ist, bevorzugt um eine vertikale Schwenkachse; wobei, vorzugsweise, der Lackierautomat (100; 200) einen Schwenkantrieb (180) zum Verschwenken der Führung (131; 231) aufweist.

9. Lackierautomat (100; 200) nach einem der vorhergehenden Ansprüche, mit einem, vorzugsweise mit mindestens zwei, Abstandssensor/-en (140; 240) zur Kontrolle der Ausrichtung des Lackierautomaten (100; 200) und der Beschichtungsdüse (110; 210) in Relation zum Bauteil (9);
- wobei, vorzugsweise, der/die Abstandssensor/-en (140; 240) zum Messen eines Abstands (d₁; d₂) zwischen der Beschichtungsdüse (110; 210) und/oder einer/der die Beschichtungsdüse (110; 210) aufweisenden Führungseinheit (130; 230) zu dem Bauteil (9), insbesondere an einem, vorzugsweise an beiden, Ende/-n der Linearbewegung der Beschichtungsdüse (110; 210) entlang der Führung (131; 231), eingerichtet ist/sind;
oder
- wobei, vorzugsweise der/die Abstandssensor/-en (240) zum Messen eines seitlichen Abstands des Lackierautomaten (200) zu dem Bauteil (9), insbesondere zur Detektion einer Querstellung des Lackierautomaten (200), eingerichtet ist/sind.

10. Lackierautomat (100; 200) nach einem der vorhergehenden Ansprüche, mit einer Absaugvorrichtung (150; 250) zum Absaugen von Beschichtungsmaterialstaub;
wobei, vorzugsweise, eine/die die Beschichtungsdüse (110; 210) aufweisende Führungseinheit (130; 230) die Absaugvorrichtung (150; 250) aufweist;
wobei, vorzugsweise, die Absaugvorrichtung (150; 250) oberhalb und/oder unterhalb der Beschichtungsdüse (110; 210), insbesondere im Wesentlichen über die gesamte Breite entlang der Linearbewegung der Beschichtungsdüse (110; 210) entlang der Führung (131; 231), angeordnet ist.

11. Lackierautomat (100; 200) nach einem der vorhergehenden Ansprüche, wobei die Beschichtungsdüse (110; 210) aus einer/der die Beschichtungsdüse (110; 210) aufweisenden Führungseinheit (130; 230), hervorragt, insbesondere gegenüber einer Vorderseite (151; 251) einer/der Absaugvorrichtung (150;250) in Düsenaustrittsrichtung gesehen hervorsteht.

12. Lackierautomat (100; 200) nach einem der vorhergehenden Ansprüche, wobei der Automatenantrieb (120; 220) eingerichtet ist, den Lackierautomaten (100; 200), zum Beschichten eines benachbarten Abschnitts, insbesondere ferngesteuert, fortzubewegen.

13. Lackierautomat (100; 200) nach einem der vorhergehenden Ansprüche, mit einem/dem Fahrgestell (160; 260), wobei zumindest ein Beschichtungsmaterialversorgungssystem, insbesondere umfassend zumindest einen Tank mit Beschichtungsmaterial und eine Pumpeneinheit, auf dem Fahrgestell (160; 260), insbesondere auf einer Plattform des Fahrgestells (160; 260) angeordnet ist.

14. Lackierautomat (100) nach einem der vorhergehenden Ansprüche, wobei die Beschichtungsdüse (110), insbesondere eine/die die Beschichtungsdüse (110) aufweisende Führungseinheit (130), vertikal verfahrbar eingerichtet ist; vorzugsweise indem die Beschichtungsdüse (110), insbesondere die Führungseinheit (130), an einem Portal (170) des Lackierautomaten (100), insbesondere durch einen Vertikalantrieb (190), höhenverschiebbar geführt ist.

15. Lackierautomat (100) nach einem der vorhergehenden Ansprüche, mit einem/dem Portal (170) zum Tragen der Beschichtungsdüse (110), insbesondere zum Tragen einer/der die Beschichtungsdüse (110) aufweisenden Führungseinheit (130), sowie zum Positionieren dieser relativ zum Bauteil (9);
wobei, vorzugsweise, das Portal (170) zum Wechseln des Lackierautomaten (100) in einen zusammengepackten Transportzustand in einen Basisteil sowie einen Oberteil (171) teilbar eingerichtet ist.

16. Lackierautomat (200) nach einem der Ansprüche 7 bis 13, wobei die Beschichtungsdüse (210), insbesondere eine/die die Beschichtungsdüse (210) aufweisende Führungseinheit (230), derart, insbesondere an einer Rückseite des Lackierautomaten (200), angeordnet ist, dass das Beschichten nach unten in Richtung Untergrund erfolgt.

17. Lackierautomat (200) nach einem der Ansprüche 7 bis 13 oder 16, mit einem Neigungssensor (270) zur Detektion einer Schieflage des Lackierautomaten (200) und/oder der Führung (231) der Beschichtungsdüse (210), insbesondere einer/der die Beschichtungsdüse (210) aufweisenden Führungseinheit (230);
wobei, vorzugsweise, der Neigungssensor (270) mit einem Seitenantrieb (280) zur Seitwärtsfahrt des Lackierautomaten (200) und damit zum Ausgleich der Schieflage gekoppelt ist.

18. Lackierautomat (200) nach einem der Ansprüche 7 bis 13, 16 oder 17, mit einem/dem Seitenantrieb (280) zur Seitwärtsfahrt des Lackierautomaten (200), insbesondere durch Seitenräder (281 und 282) des Lackierautomaten (200).

19. Lackierautomat (200) nach einem der Ansprüche 7 bis 13, oder nach einem der Ansprüche 16 bis 18, mit Längsrädern (221 und 222) zum Fortbewegen des Lackierautomaten (200) in Vorschubrichtung (V) durch den Automatenantrieb (120; 220), zum Beschichten eines benachbarten Abschnitts;
sowie, vorzugsweise, zusätzlich mit Seitenrädern (281 und 282)/den Seitenrädern (281 und 282) zum Durchführen einer/der Seitwärtsfahrt des Lackierautomaten (200) zum Ausgleich einer/der Schieflage;
wobei, vorzugsweise, die Seitenräder (281 und 282) wenigstens ein, insbesondere zwei, angetriebenes Seitenrad/ angetriebene Seitenräder (281) zur Seitwärtsfahrt durch einen/den Seitenanrieb (280) umfassen; wobei, vorzugsweise, die Seitenräder (281 und 282) vertikal, insbesondere durch einen Verstellantrieb, höhenverstellbar eingerichtet sind, insbesondere individuell, vorzugsweise, um zwischen einer Höhe oberhalb der Längsräder (221 und 222) und damit einem Passivzustand ohne Eingriff mit dem Untergrund sowie einer Höhe unterhalb der Längsräder (221 und 222) und damit einem Aktivzustand in Eingriff mit dem Untergrund verstellt werden zu können.

20. Lackierautomat (200) nach Anspruch 19, wobei die Längsräder (221 und 222) im Wesentlichen grundsätzlich senkrecht zu den Seitenrädern (281 und 282) ausgerichtet sind.
